# EUROPEAN PATENT SPECIFICATION

(11) **EP 1 126 699 B1**
(45) Date of publication and mention of the grant of the patent: **30.05.2012**
(21) Application number: 01301137.4
(22) Date of filing: 08.02.2001
(51) Int. Cl.: H04N 5/45

(54) **OSD system**
OSD-System
Système OSD

(30) Priority: 14.02.2000 KR 2000006835
(43) Date of publication of application: 22.08.2001
(73) Proprietor: Samsung Electronics Co., Ltd., Suwon-si, Gyeonggi-do 442-742 (KR)
(72) Inventor: Chung, Min-Hyung, Suwon-city, Kyungki-do (KR); Han, Yeong-Taek, Paldal-gu, Suwon-city, Kyungki-do (KR)
(74) Representative: Walaski, Jan Filip

(56) References cited:
- EP-A- 0 818 925
- EP-A- 0 933 940
- EP-A2- 0 372 384
- WO-A-98/48571
- US-A- 4 656 654
- US-A- 5 181 113
- US-A- 5 579 057
- US-A- 5 721 593
- US-A- 6 002 394

## Description

The present invention relates to an apparatus for having a display function, the apparatus comprising an graphic data store and processing means for generating a display control signal using graphic data from said store.

Video apparatus such as televisions, video cassette recorders and video cameras are often provided with an on-screen display (OSD) function. To perform the OSD function, an OSD font ROM is included in the video apparatus. An RGB OSD signal is read from the font ROM in response to a font ROM address signal for data to be displayed and the read RGB OSD signal is inserted into a video signal so that the OSD data is displayed in the video image on a screen.

However, in the case of the OSD functions provided using a font ROM type OSD function, OSD data is baked in a font ROM and then provided to a user. Accordingly, the user cannot change an OSD display as he or she pleases. Thus, the same OSD is always displayed irrespective of the model or make of a video apparatus.

In order to accomplish various OSD displays, a variety of OSD font data needs to be burnt in a font ROM which is very inefficient when one considers the cost versus the frequency of use of the OSD function.

The font data, i.e. the graphic data, defines the form of symbols not the arrangement of symbols to form messages.

WO9848571 A1 describes a system for enabling a user to control image characteristics of different regions of a display screen. One region of the display may be used to display EPG information, in the form of an on-screen display. The EPG content may be downloaded from a server, stored and displayed.

However, the present invention has application beyond the above-described video apparatuses and can be used to enhance the display capabilities of other types of apparatus, e.g. MP3 players, mobile phones and digital broadcast receivers.

An apparatus according to the present invention is receiving means operable to receive graphic data transmitted from a remote location and store received graphic data in said store, and the processing means being responsive to a set out in the claims.

The present invention may be implemented in a television set which has a display means for producing an image in dependence on the combination video signal.

The present invention may also be implemented in a video camera which has video signal recording means for recording the combination video signal and/or video display means for displaying the combination video signal.

Embodiments of the present invention will now be described, by way of example, with reference to the accompanying drawings, in which:
Figure 1 is a block diagram showing a television receiver set having variable OSD graphic data according to the present invention;
Figure 2 is a flowchart view for explaining a program for receiving OSD graphic data according to the present invention;
Figure 3 is a flowchart view for explaining a program for displaying OSD graphic data according to the present invention;
Figure 4 is a block diagram showing a web television receiver set having variable OSD graphic data according to the present invention;
Figure 5 is a flowchart view for explaining a program for downloading OSD graphic data in a web television receiver set according to the present invention; and
Figure 6 is a block diagram showing a web video camera apparatus having variable OSD graphic data according to the present invention.

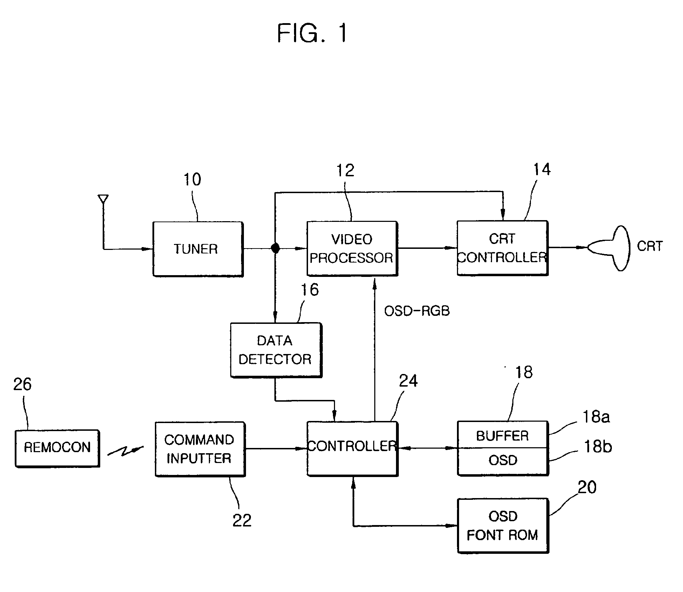

Referring to Figure 1, a television receiver set includes a tuner 10, a video processor 12, a CRT controller 14, a data detector 16, a memory 18, an OSD font ROM 20, a command input interface 22 and a controller 24.

The tuner 10 tunes in a television signal of a selected channel received via an antenna and demodulates the received television signal. The demodulated signal is a composite video signal which is output.

The video processor 12 receives the composite video signal and processes it into luminance and chrominance signals, which are then output as an RGB video signal. Also, the video processor 12 receives an OSD-RGB signal from the controller 24, inserts it into the received RGB video signal and outputs the resulting signal.

The CRT controller 14 detects a sync signal from the composite video signal and displays the RGB video signal on a CRT in response to the detected sync signal.

The data detector 16 receives the composite video signal, detects data contained in the twenty-first line of a vertical blanking interval, decodes the detected data and provides OSD graphic data to the controller 24. Here, user OSD graphic data is provided from a broadcasting station on the basis of a closed caption mode additional information format.

The memory 18 includes a RAM, an SRAM or an EEPROM and contains a buffer region 18a and an OSD region 18b. The buffer region 18a is comprised of a DRAM, in which the received OSD graphic data is temporarily stored. The OSD graphic data stored in the buffer region 18a is stored in the OSD region 18b according to a replacement command. It is preferable that the OSD region 18b is consists of an EEPROM. The data stored in the OSD region 18b is provided to the system as the OSD graphic data in a user mode.

The OSD font ROM 20 is substantially the same as an existing OSD font ROM, which can be provided as a basic option.

The command input interface 22 includes a key input device on a front panel of the set, or a remote controller receiver for receiving a remote control signal from a remote controller 26.

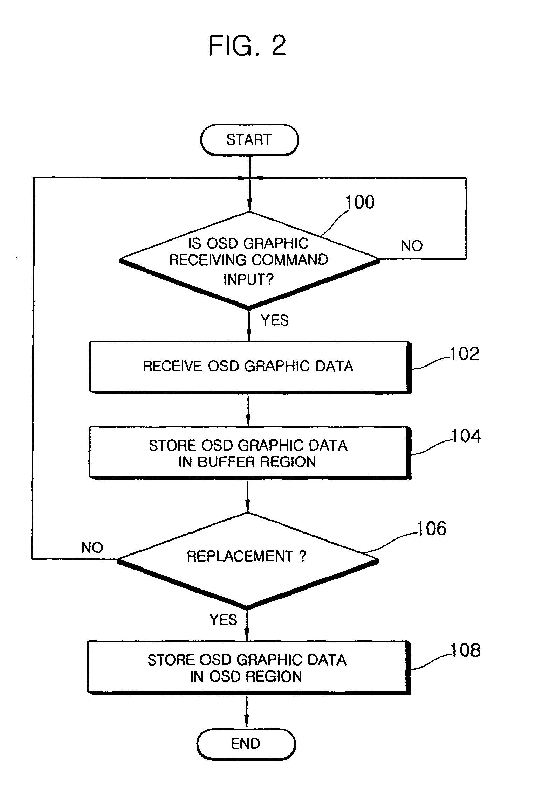

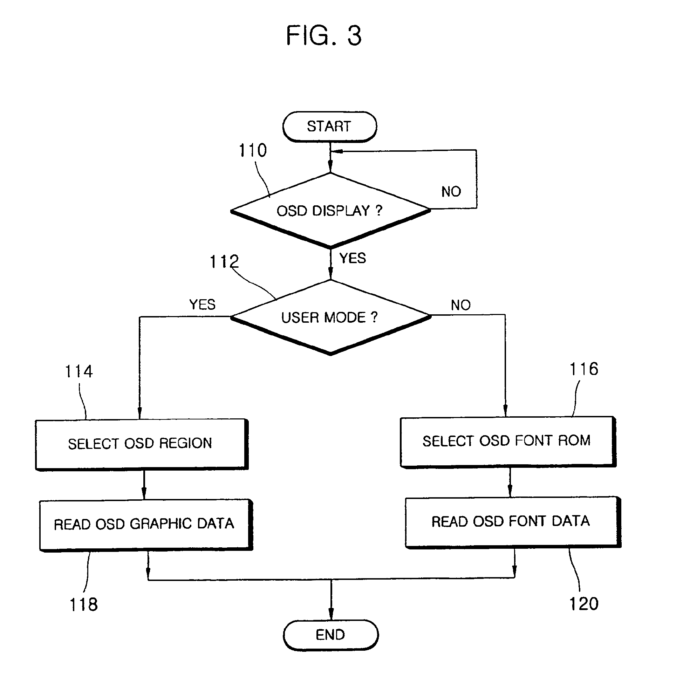

The controller 24 includes a microcomputer and peripheral circuits therefor. The controller 24 controls the whole system, and performs the programs illustrated in Figures 2 and 3.

Referring to Figure 2, the controller 24 checks whether an OSD graphic data receiving command has been received via the command input interface 22 (step 100). If a receiving command has not been received in step 100, the controller 24 continues to check whether an OSD graphic data receiving command has been received via the command input interface 22 until one is received. If a receiving command has been received, a channel of a broadcasting station which provides the OSD graphic data is selected using the tuner 10. The selected broadcasting signal is received and OSD graphic data is extracted from the received composite video signal by the data detector 16 (step 102). The controller 24 receives the extracted OSD graphic data and temporarily stores it in the buffer region 18a of the memory 18 (step 104). When a set of OSD graphic data has been completely received, the controller 24 displays on the CRT an OSD signal which reports that reception of the set of OSD graphic data is complete.

The controller 24 checks whether a replacement command has been input via the command input interface 22 (step 106). If the replacement command has been input, the OSD graphic data stored in the buffer region 18a is stored in the OSD region 18b (step 108) whereupon the program terminates. If the replacement command has not been input in step 106, the controller 24 returns to step 100, to check whether an OSD graphic data receiving command has been received via the command input interface 22.

Through the above operation, the OSD graphic data for a user mode is set from an external OSD graphic data source.

Referring to Figure 3, for display of an OSD signal, the controller 24 checks whether or not an OSD signal is to be displayed (step 110). If an OSD signal is to be displayed, the controller 24 checks whether the current mode is user mode (step 112). If an OSD signal is not to be displayed in step 110, the controller 24 continues to check whether an OSD signal is to be displayed.

If the current mode is user mode at step 112, the OSD region 18b of the memory 18 is selected (step 114) and OSD data to be displayed is read from the OSD region 18b (step 118).

If the current mode is not user mode in step 112, the OSD font ROM 20 is selected (step 116) and OSD data to be displayed is read from the OSD font ROM 20 (step 120).

The read OSD data is provided to the video processor 12 and then inserted into the received video signal so that it is displayed on the CRT.

The OSD graphic data stored in the OSD region 18b is stored in RGB form. In this case, the OSD graphic data was supplied in RGB form from the broadcasting station.

Alternatively, the OSD graphic data can supplied in a binary code or hexadecimal code form from the broadcasting station and then converted into RGB form by a code conversion program of the controller 24. The resultant RGB form is what is then stored in the OSD region 18b.

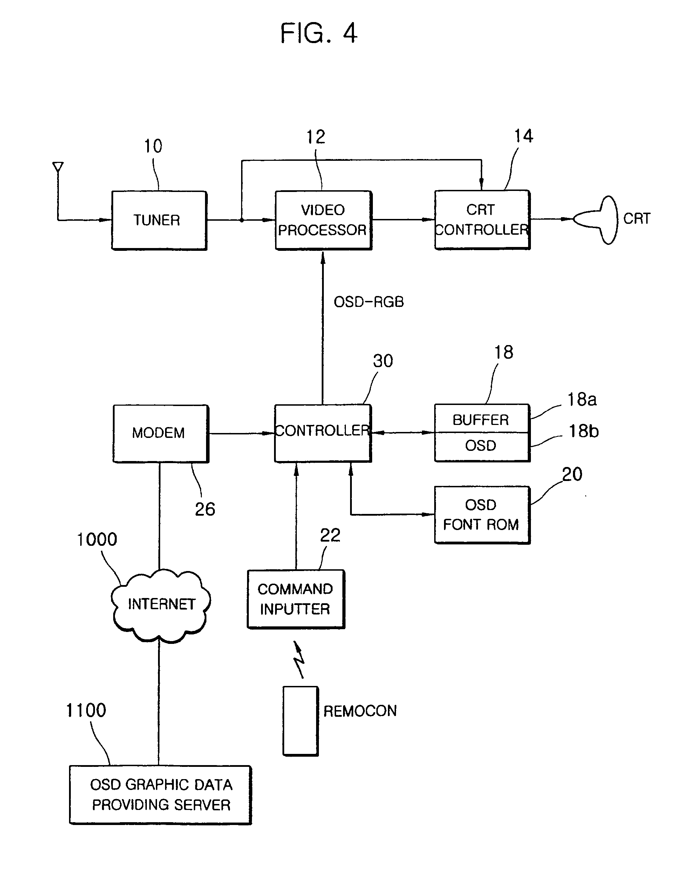

Referring to Figure 4, a web television receiver set does not have the data detector of the television receiver set of Figure 1. However, the television receiver set of Figure 4 includes a modem 26 and a controller 30 for accessing the Internet 1000. Elements in Figure 4 with counterparts in Figure 1 have the same reference numerals and will not be described in detail again.

The web television receiver set has access to the Internet via the modem and consequently to an OSD graphic data providing server 1100. The controller 30 downloads desired OSD graphic data from the OSD graphic data providing server 1100 via the modem 28 and stores it in the OSD region 18b. It is preferable that the OSD graphic data providing server 1100 is a web site run by the manufacturer of the web television receiver set.

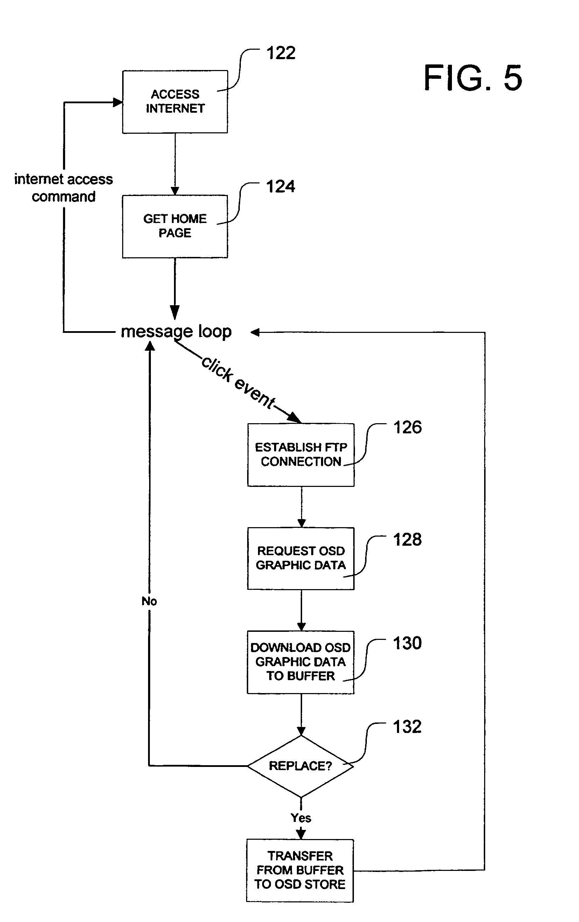

Referring to Figure 5, if an Internet access command is input via the command input interface 22, the controller 30 performs an Internet access operation using the modem 26 (step 122). If an Internet access command has been input, the controller 30 sends an http request to the OSD graphic data providing server 1100 in order to receive a home page therefrom (step 124), which is then displayed on the television's CRT. The home page contains links to URL for different OSD graphic data sets.

When the user "clicks" on one of the links, an event handler is triggered. The event handler establishes an ftp connection to an ftp server process at the server 1100 (step s126) and requests the OSD graphic data set, identified by the URL attribute of the clicked on link (step s128). The ftp server process then sends the requested OSD graphic data which is received and then temporarily stored in the buffer region 18a of the memory 18 (step 130).

After the downloading of OSD graphic data, the controller 30 checks whether a replacement command has been input using the command input interface 22 (step 132). If a replacement command has been input, the OSD graphic data stored in the buffer region 18a is stored in the OSD region 18b (step 134) and the program then terminates. If the replacement command has not been input in step 132, the controller 24 returns to the message loop.

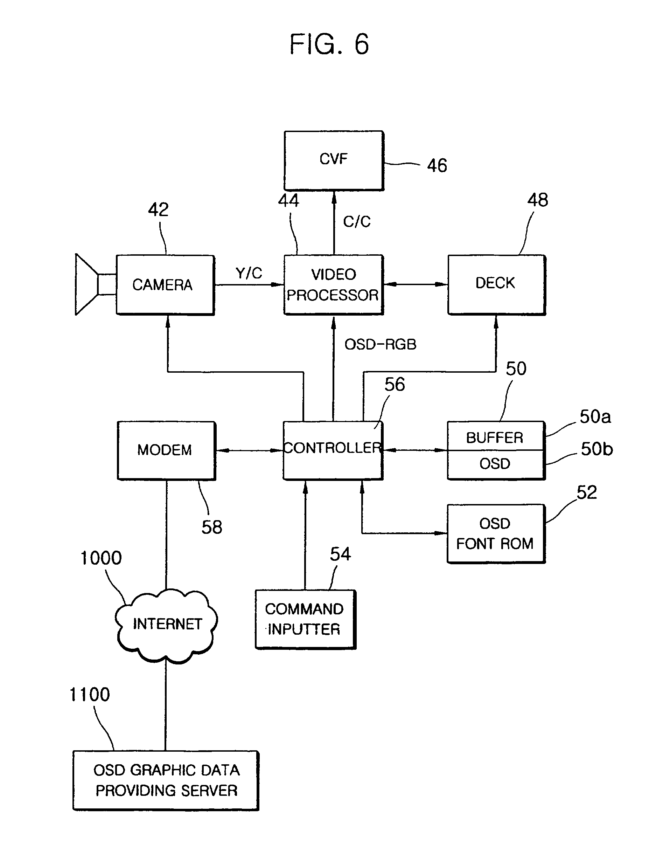

Referring to Figure 6, a web video camera apparatus is provided with variable OSD graphic data according to the present invention. The web video camera of Figure 6 includes a camera portion 42, a video processor 44, a viewfinder 46, a cassette deck 48, a memory 50, an OSD font ROM 52, a command input interface 54, a controller 56 and a modem 58.

The camera portion 42 includes a lens and a CCD type solid state image pickup device, for processing the picked-up image into a digital signal which is output as luminance and chrominance signals.

The video processor 44 processes the luminance and chrominance signals, provided from the camera portion 42, and inserts them with an OSD-RGB signal provided from the controller 56. The resulting signal is displayed to the viewfinder 46. Also, the luminance and chrominance signals containing the OSD-RGB signal are frequency modulated and resulting FM signal is provided to the deck 48 to be recorded on video tape. Signals reproduced from the deck 48 are demodulated and then be supplied to the viewfinder 46.

The viewfinder 46 comprises a CRT or a colour liquid crystal display (LCD) and processes the luminance and chrominance signals, provided from the video processor 44, to produce a visible image.

The memory 50 includes a RAM, an SRAM or an EEPROM, which includes a buffer region 50a and an OSD region 50b. The buffer region 50a consists of DRAM, in which the received OSD graphic data is temporarily stored. The OSD graphic data stored in the buffer region 50a is stored in the OSD region 50b in response to a replacement command. It is preferable that the OSD region 50b consists of EEPROM. The data stored in the OSD region 50b is used as the OSD graphic data in a user mode.

The OSD font ROM 52 is the substantially same as existing OSD font ROMs, which can be provided as a basic option.

The command input interface 54 includes a key input device on a front panel of the camera or a remote controller receiver for receiving remote control signals.

The controller 56 includes a microcomputer and peripheral circuits therefor. The controller 56 controls the camera portion 42, the video processor 44 and the deck 48, and accesses the Internet 1000 via the modem 58.

That is, the web video camera accesses the Internet 1000 via the modem 26 and then accesses the OSD graphic data providing server 1100. Accordingly, desired OSD graphic data can be downloaded from the accessed OSD graphic data providing server 1100 and the downloaded OSD graphic data is stored in the OSD region 50b.

The web video camera of Figure 6 also executes the download program shown in Figure 5 and downloads OSD graphic data from the server 1100. Also, the display program of Figure 3 is executed for reading the downloaded OSD graphic data in user mode for generating an OSD-RGB signal.

Thus, the web video camera can process the picked-up image with a variety of OSD graphic images as background images. As a result, a more varied image editing can be performed.

As described above, the video apparatus according to the present invention receives or downloads OSD graphic data from an external OSD graphic data source, to thereby enable a user to alter the OSD display data. Accordingly, a variety of OSD displays can be obtained.

## Claims

1. An apparatus having a display function, the apparatus comprising:
a graphic data store (18b) for storing graphic data, in which the graphic data store is an EEPROM;
processing means (30) for generating a display control signal using graphic data from said store (18b); and
graphic data receiving means comprising client means configured to request on-screen display OSD graphic data from server means (1100) via a data network (1000) and to receive the requested OSD graphic data from said data network and to store received OSD graphic data in a buffer (18a),
in which the processing means (30) is arranged to receive a user request to reproduce graphic data stored in the buffer (18a), and is operable to copy OSD graphic data from the buffer (18a) to the graphic data store (18b) in response to the request and to generate a display control signal using the OSD graphic data copied to the graphic data store (18b).

2. An apparatus according to claim 1, wherein the buffer (18a) is a RAM.

3. An apparatus according to claim 2 comprising a further graphic data store (20), the processing means (30) arranged to receive a user instruction specifying which of the graphic data stores (18b, 20), is to be used to provide data for the generation of a display control signal.

4. An apparatus according to claim 1, 2 or 3, wherein said processing means (30) is configured to combine the OSD graphic data from said store (18b) with another signal to produce a combination video signal.

5. A television set including an apparatus according to any one of the preceding claims and display means (14, CRT) for producing an image in dependence on a combination video signal produced by said apparatus.

6. A television set according to claim 5, further comprising a modem connected to a communications network, for downloading OSD graphic data from an external OSD graphic data source and storing it in the buffer (18a).

7. An apparatus according to claim 1, 2 or 3, wherein said graphic data is background image data and said processing means is configured to combine said image data from said store with another signal to produce a combination video signal.

8. A video camera including an apparatus according to any one of claims 1 to 4 and video signal recording means (48) for recording a combination video signal produced by said apparatus.

9. A video camera including an apparatus according to any one of claims 1 to 4 and video display means (46) for displaying a combination video signal produced by said apparatus.

10. A video camera including an apparatus according to any one of claims 1 to 4, video signal recording means (48) for recording a combination video signal produced by said apparatus and video display means (46) for displaying a combination video signal produced by said apparatus.

## Patentansprüche

1. Vorrichtung, die eine Anzeigefunktion aufweist, die Vorrichtung umfassend:
einen Grafikdatenspeicher (18b) zum Speichern von Grafikdaten, wobei der Grafikdatenspeicher ein EEPROM ist;
ein Verarbeitungsmittel (30) zum Erzeugen eines Anzeigesteuersignals unter Verwendung von Grafikdaten aus dem Speicher (18b); und
ein Grafikdatenempfangsmittel, das ein Clientmittel umfasst, das konfiguriert ist, um Bildschirmanzeige OSD von Grafikdaten von einem Servermittel (1100) über ein Datennetz (1000) anzufordern und um die angeforderten OSD-Grafikdaten von dem Datennetz zu empfangen und um die empfangenen OSD-Grafikdaten in einem Puffer (18a) zu speichern,
wobei das Verarbeitungsmittel (30) angeordnet ist, um eine Benutzeranforderung zum Reproduzieren von Grafikdaten, die in dem Puffer (18a) gespeichert sind, zu empfangen, und betriebsfähig ist, um OSD-Grafikdaten aus dem Puffer (18a) in den Grafikdatenspeicher (18b) als Reaktion auf die Anforderung zu kopieren und um ein Anzeigesteuersignal unter Verwendung der in den Grafikdatenspeicher (18b) kopierten OSD-Grafikdaten zu erzeugen.

2. Vorrichtung nach Anspruch 1, wobei der Puffer (18a) ein RAM ist.

3. Vorrichtung nach Anspruch 2, umfassend einen weiteren Grafikdatenspeicher (20), wobei das Verarbeitungsmittel (30) angeordnet ist, um eine Benutzeranweisung zu empfangen, die spezifiziert, welcher der Grafikdatenspeicher (18b, 20) zum Bereitstellen von Daten für die Erzeugung eines Anzeigesteuersignals zu verwenden ist.

4. Vorrichtung nach Anspruch 1, 2 oder 3, wobei das Verarbeitungsmittel (30) konfiguriert ist, um die OSD-Grafikdaten aus dem Speicher (18b) mit einem anderen Signal zu kombinieren, um ein Kombinationsvideosignal zu produzieren.

5. Fernsehgerät, das eine Vorrichtung nach einem der vorstehenden Ansprüche und ein Anzeigemittel (14, CRT) zum Produzieren eines Bilds in Abhängigkeit von einem von der Vorrichtung produzierten Kombinationsvideosignal enthält.

6. Fernsehgerät nach Anspruch 5, weiter umfassend ein Modem, das mit einem Kommunikationsnetz verbunden ist, zum Herunterladen von OSD-Grafikdaten von einer externen OSD-Grafikdatenquelle und zum Speichern dieser in dem Puffer (18a).

7. Vorrichtung nach Anspruch 1, 2 oder 3, wobei die Grafikdaten Hintergrundbilddaten sind und das Verarbeitungsmittel konfiguriert ist, um die Bilddaten aus dem Speicher mit einem anderen Signal zu kombinieren, um ein Kombinationsvideosignal zu produzieren.

8. Videokamera, enthaltend eine Vorrichtung nach einem der Ansprüche 1 bis 4 und ein Videosignalaufzeichnungsmittel (48) zum Aufzeichnen eines von der Vorrichtung produzierten Kombinationsvideosignals.

9. Videokamera, enthaltend eine Vorrichtung nach einem der Ansprüche 1 bis 4 und ein Videoanzeigemittel (46) zum Anzeigen eines von der Vorrichtung produzierten Kombinationsvideosignals.

10. Videokamera, enthaltend eine Vorrichtung nach einem der Ansprüche 1 bis 4, ein Videosignalaufzeichnungsmittel (48) zum Aufzeichnen eines von der Vorrichtung produzierten Kombinationsvideosignals und ein Videoanzeigemittel (46) zum Anzeigen eines von der Vorrichtung produzierten Kombinationsvideosignals.

## Revendications

1. Appareil à fonction d'affichage, comprenant :
une mémoire de données graphiques (18b) pour mémoriser des données graphiques, la mémoire de données graphiques étant une EEPROM;
un moyen de traitement (30) pour générer un signal de commande d'affichage au moyen des données graphiques provenant de ladite mémoire (18b); et
un moyen de réception de données graphiques comprenant un moyen client configuré pour demander des données graphiques d'affichage à l'écran ou OSD (On-Screen Display) à un moyen serveur (1100) par l'intermédiaire d'un réseau de données (1000) et recevoir les données graphiques OSD demandées depuis ledit réseau de données et mémoriser les données graphiques OSD reçues dans une mémoire tampon (18a),
dans lequel le moyen de traitement (30) est agencé pour recevoir une demande d'utilisateur de reproduction des données graphiques mémorisées dans la mémoire tampon (18a), et est exploitable pour copier des données graphiques OSD depuis la mémoire tampon (18a) dans la mémoire de données graphiques (18b) en réponse à la demande et générer un signal de commande d'affichage utilisant les données graphiques OSD copiées dans la mémoire de données graphiques (18b).

2. Appareil selon la revendication 1, dans lequel la mémoire tampon (18a) est une RAM.

3. Appareil selon la revendication 2, comprenant une autre mémoire de données graphiques (20), le moyen de traitement (30) étant agencé pour recevoir une instruction d'utilisateur spécifiant celle des mémoires de données graphiques (18b, 20) qui doit être utilisée pour fournir les données servant à générer un signal de commande d'affichage.

4. Appareil selon la revendication 1, 2 ou 3, dans lequel ledit moyen de traitement (30) est configuré pour combiner les données graphiques OSD provenant de ladite mémoire (18b) à un autre signal afin de produire un signal vidéo combiné.

5. Téléviseur comportant un appareil selon l'une quelconque des revendications précédentes, et un moyen d'affichage (14, CRT) pour produire une image en fonction d'un signal vidéo combiné produit par ledit appareil.

6. Téléviseur selon la revendication 5, comprenant en outre un modem connecté à un réseau de télécommunications, pour télécharger des données graphiques OSD depuis une source de données graphiques OSD externe et les mémoriser dans la mémoire tampon (18a).

7. Appareil selon la revendication 1, 2, ou 3, dans lequel lesdites données graphiques sont des données d'image de fond et ledit moyen de traitement est configuré pour combiner lesdites données d'image provenant de ladite mémoire à un autre signal en vue de produire un signal vidéo combiné.

8. Caméra vidéo comportant un appareil selon l'une quelconque des revendications 1 à 4 et un moyen d'enregistrement de signal vidéo (48) pour enregistrer un signal vidéo de combinaison produit par ledit appareil.

9. Caméra vidéo comportant un appareil selon l'une quelconque des revendications 1 à 4 et un moyen d'affichage vidéo (46) pour afficher un signal vidéo de combinaison produit par ledit appareil.

10. Caméra vidéo comportant un appareil selon l'une quelconque des revendications 1 à 4, un moyen d'enregistrement de signal vidéo (48) pour enregistrer un signal vidéo de combinaison produit par ledit appareil et un moyen d'affichage vidéo (46) pour afficher un signal vidéo combiné produit par ledit appareil.
